(19) **Europäisches Patentamt**

**European Patent Office**

**Office européen des brevets**

(11) Veröffentlichungsnummer: **0 141 164**
**B1**

(12) # EUROPÄISCHE PATENTSCHRIFT

(45) Veröffentlichungstag der Patentschrift:
16.03.88

(51) Int. Cl.⁴: **B 60 C 25/06**

(21) Anmeldenummer: **84110653.7**

(22) Anmeldetag: **07.09.84**

(54) **Montagevorrichtung für Fahrzeugluftreifen.**

(30) Priorität: **22.09.83 DE 3334203**

(43) Veröffentlichungstag der Anmeldung:
**15.05.85 Patentblatt 85/20**

(45) Bekanntmachung des Hinweises auf die Patenterteilung:
**16.03.88 Patentblatt 88/11**

(84) Benannte Vertragsstaaten:
**AT BE CH DE FR GB IT LI LU NL SE**

(56) Entgegenhaltungen:
**DE-A-3 401 476**
**FR-A-2 369 107**

(73) Patentinhaber: **Continental Gummi- Werke Aktiengesellschaft, Königsworther Platz 1, D-3000 Hannover 1 (DE)**

(72) Erfinder: **Huinink, Heinrich, Dipl.- Ing., Elbinger Strasse 2 F, D-3008 Garbsen 1 (DE)**
Erfinder: **Seitz, Hans, Dr. Dipl.- Ing., Grafenberger Strasse 5 b, D-3012 Langenhagen 1 (DE)**
Erfinder: **Rach, Heinz- Dieter, Planetenring 32, D-3008 Garbsen 1 (DE)**
Erfinder: **Frerichs, Udo, Buchenweg 7, D-3012 Langenhagen 8 (DE)**

## Beschreibung

Die Erfindung betrifft eine Montagevorrichtung für Fahrzeugluftreifen, deren Wülste sich im montierten Zustand am radial inneren Umfang der Felge befinden.

Bei Fahrzeugrädern, wie sie z. B. in der DE-A-30 00 428 beschrieben sind, können die Reifen nicht mit üblichen Montagevorrichtungen montiert werden, weil sie im Gegensatz zu den heute gebräuchlichen Rädern für eine Montage mit ihren Wülsten zunächst in radial innen an der Felge befindliche Vertiefungen gebracht werden müssen, um auf der gegenüberliegenden Seite über das radial nach innen sich erstreckende Felgenhorn geschoben werden zu können.

Der Erfindung liegt deshalb die Aufgabe zugrunde, eine Montagevorrichtung für Reifen der eingangs genannten Art anzugeben.

Diese Aufgabe wird erfindungsgemäß gelöst durch ein Montagemittel, das nach dem Einführen eines Reifenwulstabschnittes in eine Vertiefung der Felge den Wulstabschnitt fixiert, und durch eine antreibbare Rolle, die im Betrieb im Wulstbereich des Reifens angreift und deren Umfangsgeschwindigkeit größer ist als die Abrollgeschwindigkeit am Reifen.

Mit der Erfindung ist es möglich, auf einfache und reifenschonende Weise Reifen auf Felgen der unterschiedlichsten Arten zu montieren, die sich häufig von Autotyp zu Autotyp unterscheiden. Durch die im Gegensatz zu bekannten Vorrichtungen antreibbare Rolle, die das Kernstück der Erfindung darstellt, wird vor allem eine sehr schnelle Reifenmontage mit wenigen Handgriffen ermöglicht.

Bei einer bevorzugten Ausführungsform weist die Montagevorrichtung als einen Wulstabschnitt fixierendes Montagemittel eine Hebelmechanik auf, während eine angetriebene Montagerolle derart schräg am Wulstbereich angreift, daß sie den in der Nachbarschaft der Hebelmechanik liegenden Wulstabschnitt in die Montagevertiefung (Hochbett) hineindrückt, und zwar mit einer Kraftkomponente, die auf den zuerst fixierten Wulstabschnitt gerichtet ist. Durch gleichzeitiges Drehen des Drehtellers mit der Felge wird der Reifenwulst über den gesamten Felgenumfang in die Montagevertiefung (Hochbett) hineingedrückt, und er springt dann von allein oder spätestens bei der Beaufschlagung mit Luft auf die Felgensitzfläche.

Mit der Montagevorrichtung lassen sich auch Reifen von solchen Rädern montieren, bei denen die Reifenwülste exzenterartig ausgebildet sind und die Felgen keine separaten Montagevertiefungen aufweisen. Dabei dienen die eigentlichen Sitzflächen für die Wülste in Verbindung mit dem verkleinerten wirksamen Durchmesser des Reifens im Wulstbereich in der Montagestellung als Hochbett.

Nachfolgend werden mehrere Ausführungsbeispiele der Erfindung anhand einer Zeichnung erläutert.

Es zeigt

Fig. 1 eine Montagevorrichtung mit einer konkaven Rolle, mit einer aufgelegten Felge und einem Reifen in einer Vorderansicht (teilweise geschnitten),

Fig. 2 eine Montagevorrichtung, bei der die Mantelfläche der Rolle eine Profilierung in Form von Gewindegängen aufweist, in einer Vorderansicht (teilweise geschnitten),

Fig. 3 einen Teil einer Montagevorrichtung mit einer kegeligen Rolle, die im Bereich eines Reifenwulstes angreift, in einer Vorderansicht.

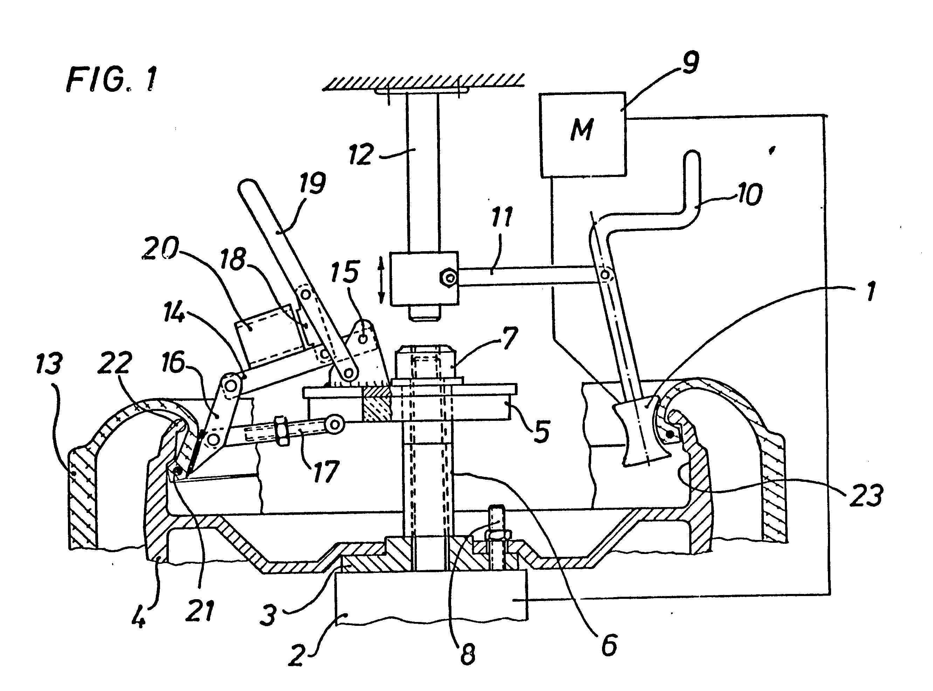

Die Vorrichtung gemäß Fig. 1 besteht im wesentlichen aus einer motorgetriebenen Rolle 1, einem Montageständer mit einem Drehteller 2, weiterhin aus einem Aufnahmeflansch 3 für eine Felge 4 und einer Montageplatte 5 mit einer Hebelmechanik, die auf eine Säule des Drehtellers 2 aufsteckbar ist, mittels eines Distanzstücks 6 in einem definierten Abstand zum Aufnahmeflansch 3 und damit zur Felge 4 gehalten wird und mit einem Verschraubelement 7 an der Säule fixiert werden kann.

Der Aufnahmeflansch 3 ist den Konturen der zu verwendenden Felge 4 angepaßt und weist an den Stellen, an denen sich in der Felge 4 Löcher für eine Radbefestigung befinden, Befestigungszapfen 8 auf, auf die eine Felge 4 aufsteckbar ist. Mit Hilfe dieser Befestigungszapfen kann die Felge 4 am Aufnahmeflansch 3 angeschraubt werden.

Kernstück der Montagevorrichtung ist eine motorgetriebene Rolle 1, die gemäß Fig. 1 als Konkavrolle mit leicht nach innen gewölbten Mantelflächen ausgebildet ist. Der Antrieb der Rolle 1 kann durch einen Motor 9 sowohl über eine Welle als auch über Treibriemen erfolgen. Die Rolle 1 und der Drehteller 2 können jeweils einen separaten Antriebsmotor 9 aufweisen, sie können jedoch auch von einem gemeinsamen Motor 9 unter Verwendung eines Getriebes versorgt werden. Zur Führung der Rolle 1 dient ein Führhebel 10, der auf einem Hebelarm 11 schwenkbar gelagert ist. Der Hebelarm 11 ist an seinem anderen Ende dreh- und fixierbar und er ist an einem Säulenabschnitt 12 höhenverstellbar befestigt. Die Drehachse der Rolle 1 verläuft zur Drehachse des Reifens 13 und zu einer senkrecht auf ihr stehenden Hochachse geneigt.

Weiterhin befindet sich an der Montagevorrichtung eine Hebelmechanik, die auf einer scheibenförmigen Montageplatte 5 angebracht ist.

Die Hebelmechanik weist einen Montagearm 14 auf, der an einem Ende in einem an der Montageplatte 5 befindlichen Lager 15 drehbar gelagert ist und der am anderen Ende mit einem Ende eines Montagelöffels 16 drehbar verbunden ist. Das andere Ende des Montagelöffels 16 wird von einem längenverstellbaren Hebelarm 17 geführt, der drehbar an der Montageplatte 5 gelagert ist.

Weiterhin gehört zur Hebelmechanik ein Feststellelement 18, das am Montagearm 14 angreift und das über einen Feststellhebel 19 betätigbar ist. Schließlich befindet sich am Montagearm 14 noch eine Aufnahmehülse 20 für eine Hebelstange.

Der Drehteller 2 weist nach unten hin einen vergrößerten Durchmesser auf, so daß er gleichzeitig als Auflagetisch für den Reifen dient.

Nachfolgend wird die Funktionsweise der Montagevorrichtung beschrieben. Es wird dabei von einem Zustand ausgegangen, bei dem eine Felge 4, deren Felgenkranz sich im Innenraum eines Reifens 13 befindet, auf dem Aufnahmeflansch 3 befestigt ist, ein Distanzstück 6 aufgelegt und die Hebelmechanik aufgesetzt ist. Der Montagelöffel 16 der Hebelmechanik befindet sich in seiner höchsten Stellung.

Das Einbringen der Felge 4 in den Reifeninnenraum kann auf einfachste Weise von Hand geschehen, indem eine Felge 4 senkrecht auf den Reifen 13 zubewegt wird, dabei die Wülste 21 ein wenig auseinanderdrückt (O-förmiger Querschnitt der Wulstkerne) und im Reifeninnenraum um 90° gedreht wird.

Zunächst wird eine Hebelstange in die Aufnahmehülse 20 gesteckt und heruntergedrückt. Dabei bewegt sich der Montagelöffel 16, der mit seiner Angriffsfläche im radial inneren Bereich am Reifenwulst 21 anliegt, nach unten und nimmt einen Abschnitt des Reifenwulstes 21 mit, d.h. er drückt ihn über das Felgenhorn 22 hinweg. Da der Montagelöffel 16 weiterhin vom Hebelarm 17 geführt wird, der eine Drehbewegung um seine Achse in der Montageplatte 5 ausführt, existiert für die Angriffsfläche des Montagelöffels 16 eine zweite Bewegungskomponente, die ein Drücken auf den Reifenwulst 22 radial nach außen zur Folge hat.

Am Ende der Senkrechtbewegung der Hebelstange befindet sich der Montagelöffel 16 in einer Position, in der er den Reifenwulst 21 in eine Vertiefung 23 (Hochbett) der Felge 4 hineindrückt (Fig. 1). In dieser Stellung wird er durch Umlegen des Feststellhebels 19 fixiert, so daß der Reifenwulst 21 beim nachfolgenden Arbeitsgang nicht aus der Vertiefung 23 herausspringen kann.

Als nächstes wird die Rolle 1 mit Hilfe des Führhebels 10 in eine Betriebsstellung gebracht, die sich an einem Reifenwulstabschnitt in unmittelbarer Nachbarschaft des vom Montagelöffel 16 fixierten Abschnitts befindet. Dabei verläuft die Achse der Rolle 1 derart schräg zur Drehachse und zu einer Hochachse des Reifens 13, daß nach dem Ingangsetzen des Rollenmotors 9 die Rolle 1 auf den Reifenwulst 21 eine Kraft ausübt, die zum einen eine axial nach innen gerichtete Komponente und zum anderen eine in Umfangsrichtung auf den fixierten Wulstabschnitt gerichtete Komponente aufweist. Dies wird außer durch die Schrägstellung der Rolle 1 dadurch erreicht, daß die Umfangsgeschwindigkeit der Rolle 1 größer gewählt wird als die Abrollgeschwindigkeit am Reifen 13. Durch das gleichzeitige Drehen des Drehtellers 2 mit der Felge 4 und dem Reifen 13 wird der Reifenwulst 21 über seinen gesamten Umfang in die Montagevertiefung 23 hineingedrückt. Zur Erhöhung der Wirksamkeit kann die Rolle 1 mit einer reibungserhöhenden Beschichtung versehen sein. Nach dem Entfernen der Rolle 1 und des Montagelöffels 16 aus der Betriebsstellung und dem Wenden von Felge 4 und Reifen 13 kann der zweite Reifenwulst 21 in der gleichen Weise montiert werden, wobei jedoch bei unsymmetrisch angebrachter Felgenschüssel ein anderes Distanzstück 6 zu verwenden ist.

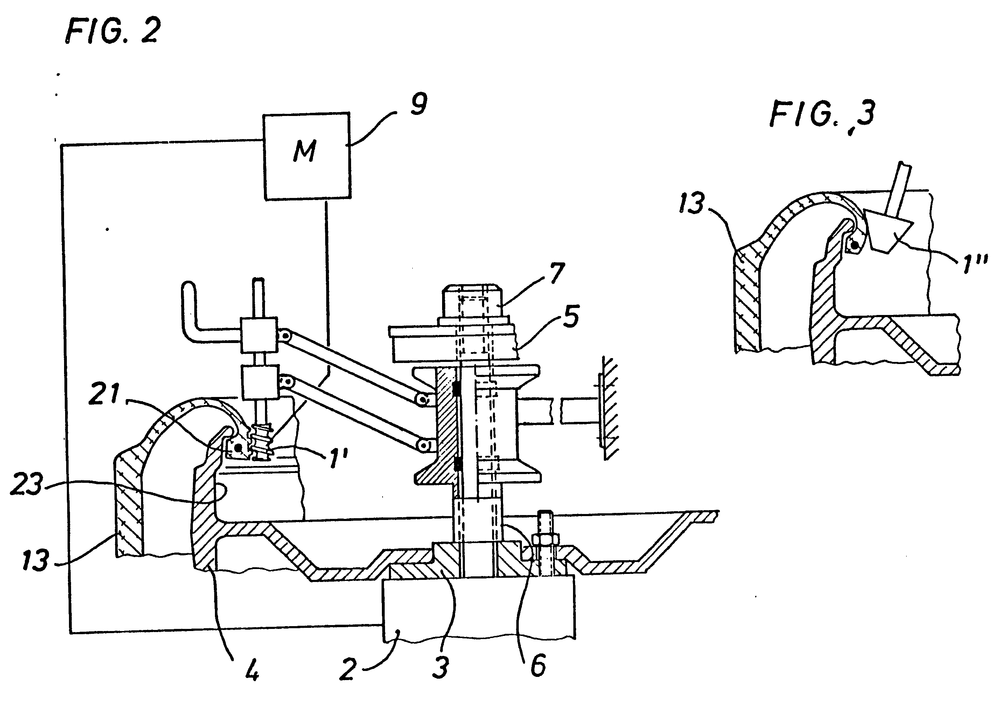

Die Montagevorrichtung gemäß Fig. 2 unterscheidet sich von der vorstehend beschriebenen vor allem durch eine Montagerolle 1', deren Mantelfläche eine Profilierung in Form von Gewindegängen aufweist. Eine solche Rolle 1 ist dann besonders günstig einsetzbar, wenn der Reifen 13 im Wulstbereich entsprechende Nuten und Stege aufweist, weil dann durch das Drehen der Rolle 1' der Reifenwulst 21 zuverlässig in die Montagevertiefung 23 hineingedrückt wird. Eine derartige Ausbildung von Rolle 1 und Reifenwulst 21 ist auch bei sogenannten Exzenterwulstreifen von Vorteil, d.h. bei Reifen, bei denen der Wulstkern exzentrisch in einem schwenkbaren Wulst gelagert ist. Zur Montage befindet sich der Wulst in einer Stellung, in der er in eine Sitzfläche hineingedrückt und dann auf der gegenüberliegenden Seite über das Felgenhorn geschoben werden kann, anschließend dreht er in die Betriebsstellung. Somit dienen die Sitzflächen auf der Felge gleichzeitig als Montagevertiefungen, so daß sich separate Vertiefungen 23 erübrigen.

Die Rolle 1' in Fig. 2 unterliegt einer Parallelogrammführung, so daß sie sich beim Absenken gleichzeitig ein wenig nach radial außen bewegt und damit den Wulst 21 in die Montagevertiefung 23 hineindrückt. Ansonsten ist die Montagevorrichtung wiederum derart durchkonstruiert, daß die Rolle 1' bei der Montage am Ort der Bedienperson bleibt, während der Drehteller mit Felge 4 und Reifen 13 sowie die auf der Montageplatte 5 befindlich Hebelmechanik nahezu eine Umdrehung ausführen.

Fig 3 zeigt einen Ausschnitt aus einer Montagevorrichtung mit einer kegeligen Montagerolle 1''. Alle andere Teile der Vorrichtung können wie bei den ersten beiden Beispielen ausgebildet sein.

Es sollte angemerkt werden, daß bei Bedarf die Hebelmechanik selbstverständlich statt an einer Zentralsäule auch radial außen vom Reifen z. B. am Drehteller montiert sein kann, so daß lediglich der Montagelöffel in den Innenraum hineingreift. Die Hebelmechanik kann auch hydraulisch oder pneumatisch betätigbar ausgebildet sein. Weiterhin ist es auch möglich, statt der Hebelmechanik eine zweite Rolle vorzusehen. In einem solchen Fall wird man statt des Drehtellers einen festen Montagetisch wählen, die Rollen in unmittelbarer Nachbarschaft am Reifenwulst ansetzen und in entgegengesetzter Richtung am Umfang des Reifens im Wulstbereich herumführen. Die beiden Rollen drehen sich dabei in der Weise, daß die eine Kraftkomponente der auf die Reifenwülste wirkenden Kraft tangential in Richtung des bereits montierten Umfangsabschnitts des Reifenwulstes weist. Schließlich ist noch zu erwähnen, daß für den Antrieb des Drehtellers und der Rolle zwei separate Motoren oder auch ein einziger Motor mit einem Getriebe gewählt werden können. Wenn man den Drehteller mit der Felge und dem Reifen in definierter Weise abbremst, ist es sogar möglich, ausschließlich die Montagerolle anzutreiben.

**Patentansprüche**

1. Montagevorrichtung für Fahrzeugluftreifen, deren Wülste sich im montierten Zustand am radial inneren Umfang der Felge befinden, gekennzeichnet durch ein Montagemittel, das nach dem Einführen eines Reifenwulstabschnittes in eine Vertiefung (23, Hochbett) der Felge (4) den Wulstabschnitt fixiert, und durch eine antreibbare Rolle (1, 1', 1''), die im Betrieb im Wulstbereich des Reifens (13) angreift und deren Umfangsgeschwindigkeit größer ist als die Abrollgeschwindigkeit am Reifen (13).

2. Montagevorrichtung nach Anspruch 1, dadurch gekennzeichnet, daß die Drehachse der Rolle (1, 1', 1'') zur Drechachse des Reifens (13) und zu einer senkrecht auf ihr stehenden Hochachse geneigt verläuft.

3. Montagevorrichtung nach Anspruch 1, gekennzeichnet durch einen konkaven Querschnitt der antreibbaren Rolle (1).

4. Montagevorrichtung nach Anspruch 1, gekennzeichnet durch eine kegelige Rolle (1'').

5. Montagevorrichtung nach den Anprüchen 1, 3 oder 4, dadurch gekennzeichnet, daß die Mantelfläche der Rolle (1, 1' 1'') eine Profilierung in Form von Gewindegängen aufweist.

6. Montagevorrichtung nach Anspruch 1, dadurch gekennzeichnet, daß die Rolle (1, 1',1'') mit einer Beschichtung versehen ist, die in Verbindung mit dem Reifenmaterial an der Wulstoberfläche einen hohen Reibungskoeffizienten aufweist.

7. Montagevorrichtung nach Anpruch 1, dadurch gekennzeichnet, daß das Montagemittel aus einer Hebelmechanik besteht, bei deren Betätigung ein Montagelöffel (16), der im radial inneren Bereich eines Reifenwulstes (21) angreift, eine überwiegend axail nach innen und geringfügig radial nach außen gerichtete Bewegung ausübt.

8. Montagevorrichtung nach Anspruch 1, dadurch gekennzeichnet, daß als Montagemittel eine zweite antreibbare Rolle dient und daß die beiden Rollen bei einer Reifenmontage in entgegengesetzter Felgenumfangsrichtung geführt werden.

9. Montagevorrichtung nach Anspruch 1, dadurch gekennzeichnet, daß die Rolle (1, 1', 1'') und der Drehteller (2) mittels einer einzigen Antriebsquelle (9) antreibbar sind.

**Claims**

1. Mounting device for pneumatic vehicle tyres whose beads, in the assembled state, are situated on the radially inner circumference of the rim, characterised by a mounting means which secures the bead portion after a tyre bead portion has been introduced into a recess (23, high bed) in the rim (4), and by a drivable roller (1, 1', 1'') which engages, during operation, in the bead region of the tyre (13) and whose circumferential speed is greater than the rolling speed along the tyre (13).

2. Mounting device according to claim 1, characterised in that the axis of rotation of the roller (1, 1', 1'') extends inclinedly relative to the axis of rotation of the tyre (13) and relative to a vertical axis extending perpendicular to the axis of rotation of the tyre.

3. Mounting device according to claim 1, characterised by a concave cross-section of the drivable roller (1).

4. Mounting device according to claim 1, characterised by a conical roller (1'').

5. Mounting device according to claims 1, 3 or 4, characterised in that the surface of the roller (1, 1', 1'') has a profiling in the form of threads.

6. Mounting device according to claim 1, characterised in that the roller (1, 1', 1'') is provided with a coating which has a high coefficient of fricton in conjunction with the tyre material on the bead surface.

7. Mounting device according to claim 1, characterised in that the mounting means includes a lever mechanism which, when acuated, causes a mounting spoon (16), which engages in the radially inner region of a tyre bead (21), to move predominantly axially inwardly and slightly radially outwardly.

8. Mounting device according to claim 1, characterised in that a second drivable roller serves as the mounting means, and in that the two rollers are guided in a direction opposite to the circumferential direction of the rim during tyre assembly.

9. Mounting device according to claim 1, characterised in that the roller (1, 1', 1'') and the rotatable plate (2) are drivable by means of a single driving source (9).

**Revendications**

1. Dispositif de montage de pneumatique de véhicule, dont les talons sont situés dans la condition de montage sur la périphérie radialement intérieure de la jante, caractérisé par un moyen de montage qui, après introduction d'une partie du talon du pneumatique dans un évidement (23, appui supérieur) de la jante (4), fixe la partie de talon, et par un galet (1, 1', 1'') pouvant être entraîné, qui s'accroche en service sur la zone de talon du pneumatique (13) et dont la vitesse périphérique est supérieure à la vitesse de roulement sur le pneumatique (13).

2. Dispositif de montage selon la revendication 1, caractérisé en ce que l'axe de rotation du galet (1, 1', 1'') est orienté avec inclinaison par rapport à l'axe de rotation du pneumatique (13) et par rapport à un axe normal perpendiculaire à celui-ci.

3. Dispositif de montage selon la revendication 1, caractérisé par une section droite concave du galet (1) pouvant être entraîné.

4. Dispositif de montage selon la revendication 1, caractérisé par un galet conique (1'') .

5. Dispositif de montage selon les revendications 1, 3 ou 4, caractérisé en ce que la surface périphérique du galet (1, 1', 1'') a un profil en forme de filetage.

6. Dispositif de montage selon la revendication 1, caractérisé en ce que le galet (1, 1', 1'') est pourvu d'un revêtement qui possède un grand coefficient de frottement en relation avec le matériau de pneumatique sur la surface de talon.

7. Dispositif de montage selon la revendication 1, caractérisé en ce que le moyen de montage se compose d'un mécanisme à levier au cours de l'actionnement duquel une palette de montage (16), qui agit dans une zone radialement intérieure d'un talon de pneumatique (21), effectue un mouvement orienté principalement axialement vers l'intérieur et légèrement radialement vers l'extérieur.

8. Dispositif de montage selon la revendication 1, caractérisé en ce que comme moyen de montage, il est prévu un second galet pouvant être entraîné et en ce que les deux galets sont guidés, lors d'un montage de pneumatique, dans des sens périphériques opposés de la jante.

9. Dispositif de montage selon la revendication 1, caractérisé en ce que le galet (1, 1', 1'') et le plateau rotatif (2) peuvent être entraînés à l'aide d'un seul moteur d'entraînement (9).

FIG. 1

0 141 164

FIG. 3

FIG. 2